# EUROPÄISCHE PATENTANMELDUNG

(11) **EP 1 034 924 A1**
(43) Veröffentlichungstag der Anmeldung: **13.09.2000**
(21) Anmeldenummer: 00102147.6
(22) Anmeldetag: 07.02.2000
(51) Int. Cl.: B41F 21/08, B41F 13/03, B65H 29/04, B65H 5/08, B65G 17/44

(54) **Vorrichtung zur Produkthandhabung**

(30) Priorität: 10.03.1999 US 265477
(71) Anmelder: Heidelberger Druckmaschinen Aktiengesellschaft, 69115 Heidelberg (DE)
(72) Erfinder: St. Ours, Joseph Adrian, Lee, NH 03824 (US)

(57) **Zusammenfassung**

Eine erfindungsgemäße Vorrichtung zur Handhabung von Produkten, insbesondere von Druckprodukten im Falzapparat einer Rollenrotations-Druckmaschine, die einen Zahnriemen (2) mit einer Vielzahl von Zähnen und mindestens ein Produkthandhabungselement (9) umfasst, zeichnet sich dadurch aus, dass das Produkthandhabungselement (9) an dem Zahnriemen (2) befestigt ist.

## Beschreibung

Die vorliegende Erfindung betrifft eine Vorrichtung zur Handhabung von Produkten, insbesondere von Druckprodukten und Signaturen, gemäß dem Oberbegriff von Anspruch 1. Die Erfindung ist insbesondere geeignet für den Einsatz in der Druckrechnik, und dabei insbesondere für die Produktübergabe und -bearbeitung in Hochgeschwindigkeits-Falzapparaten sowie für Übergabevorrichtungen und Bahnhandhabungssysteme in Druckmaschinen.

Druckprodukte müssen in Druckmaschinen nach genauen Zeitvorgaben und mit der geeigneten Geschwindigkeit transportiert werden. Z. B. werden Greifer dazu eingesetzt, um einzelne Bogen sicher zu ergreifen und einem Druckwerk zuzuführen. Auch an den Übergabepunkten zwischen einzelnen Druckwerken und an der Auslage werden nach genauen Zeitvorgaben arbeitende Greifer eingesetzt, um die einzelnen Druckprodukte z. B. am Falzapparat oder in der Stapelauslage zu handhaben. In Rollenrotationsdruckmaschinen werden ebenfalls Greifersysteme verwendet, z. B. beim Bahneinzug während des Einrichtens der Maschine.

In verschiedenen Übergabevortichtungen, z. B. in Auslegern, werden die Greifer auf Ketten transportiert. Dabei sind die Greifer an Greiferwagen auf endlos umlaufenden Ketten angeordnet. Die Greifer werden in der Regel nach einer bestimmten Zeitvorgabe aktiviert, indem eine Kurvenrolle sich im Verlauf der Bewegung der Kette über eine Kurve bewegt und dadurch den Greifer öffnet. Diese Systeme arbeiten ebenfalls nach genauen Zeitvorgaben, z. B. in den in Produkttransportrichtung den Druckwerken nachgeordneten Falzapparaten. Die bedruckte Signatur muss dabei mit der Geschwindigkeit der vorgeordneten Druckwerke gefalzt werden, wobei es von größter Bedeutung ist, dass die Signaturen nach genauen Zeitvorgaben und exakt gesteuert ergriffen und durch den Falzapparat transportiert werden.

Die Geschwindigkeit in einem solchen Greiferkettenmechanismus ist in der Regel durch die Ketten beschränkt. Die Ketten sind zudem wartungsaufwendig und müssen zur Gewährleistung einer laufruhigen, störungsfreien Funktionsweise geschmiert werden.

Es wurde bereits der Versuch unternommen, die Ketten in Greifer-Transportsystemen durch Bänder, in der Regel Urethan-Zahnriemen mit angesetztem Profil, zu ersetzen. Bänder bieten gegenüber Ketten viele Vorteile, ihre Laufgeschwindigkeit ist jedoch ebenfalls begrenzt. Die Verbindungsstelle zwischen dem Band und dem Profil ist ferner nur bedingt dehnfest.

Aufgrund der immer höheren Geschwindigkeiten von Druckmaschinen und von mir diesen zusammenhängenden Produkthandhabungselementen ist die Geschwindigkeit der Greifersysteme von größter Bedeutung. Auch die Dehnfestigkeit der in den Systemen eingesetzten Bänder spielt eine große Rolle, da ein Reißen der Bänder zu einem zeitweisen Ausfall der Druckmaschine führen kann.

Demgemäß ist es eine Aufgabe der vorliegenden Erfindung, eine Vorrichtung zur Handhabung von Produkten zu schaffen, durch welche die zuvor erwähnten Nachteile beseitigt werden, welche in einer Druckmaschine bei hohen Geschwindigkeiten ein verbessertes zeitlich abstimmbares und steuerbares Ergreifen und Transportieren der Produkte gewährleistet und gleichzeitig bei höherer Dehnfestigkeit einen gegenüber Urethan-Zahnriemen reduzierten Wartungsaufwand erfordert.

Diese Aufgabe wird durch die Merkmale von Anspruch 1 gelöst.

Weitere Merkmale der Erfindung ergeben sich aus den Unteransprüchen.

Eine erfindungsgemäße Vorrichtung zur Handhabung von Produkten umfasst einen Zahnriemen mit einer Vielzahl von Zähnen und ein Produkthandhabungselement, wobei das Produkthandhabungselement an dem Zahnriemen befestigt ist.

Es kann ferner vorgesehen sein, den Zahnriemen in Längsrichtung dehnfest auszugestalten, wodurch in vorteilhafter Weise Bewegungsschwankungen der an dem Zahnriemen befestigten Produkthandhabungselemente in der Längsrichtung beseitigt werden können, was das zeitlich abgestimmte Führen der Produkte zusätzlich erleichtert.

Es ist ferner möglich, das Produkthandhabungselement an einem der Zähne zu befestigten. Diese Ausgestaltung der erfindungsgemäßen Vorrichtung erlaubt es z. B., den Grundkörper des Riemens mit in Längsrichtung verlaufenden, den Riemen verstärkenden Fasern auszustatten.

Gemäß einer weiteren Ausführungsform der vorliegenden Erfindung kann es vorgesehen sein, dass mindestens einer der Zähne eine Öffnung aufweist, mittels welcher das Produkthandhabungselement am Zahnriemen befestigt ist.

Die Öffnung kann vorzugsweise als eine sich vollständig durch den mindestens einen Zahn erstreckende Bohrung ausgebildet sein, in die beispielsweise ein Lagerstift eingefügt werden kann, an dessen seitlich aus dem Band hervortretenden Abschnitten das Bearbeitungselement befestigt werden kann.

In einer weiteren Ausführungsform der vorliegenden Erfindung kann der Zahnriemen als ein endloses Band ausgebildet, bei dem die Zähne eine umlaufende Innenfläche des Bandes bilden und mit einem den Zahnriemen umlenkenden Zahnrad in Eingriff stehen.

Gemäß einer weiteren Ausführungsform der Erfindung kann das Produkthandhabungselement als ein auf dem Band befestigtes Greiferelement ausgebildet sein, welches um eine durch die Öffnung verlaufende Achse schwenkbar ist.

Weiterhin kann das Produkthandhabungselement als eine z. B. Punkturnadeln umfassende Nadelanordnung einer Transportvorrichtung für Druckprodukte, als ein Falzmesser in einem Falzapparat einer Papierverarbeitungsvorrichtung oder als ein Falzklappenpaar in einem Falzapparat einer Papierverarbeitungsvorrichtung, z. B. einem Falzapparat einer Druckmaschine, ausgebildet sein.

In einer weiteren Ausführungsform der Erfindung kann seitlich an das Band ein Paar einander gegenüberliegender Führungsrollen angeordnet, z. B. angeflanscht sein, welche das Band spreizen. Das Führungsrollenpaar ist vorzugsweise um eine gemeinsame Achse drehbar. Diese Führungsrollen halten das Band exakt in seiner Bewegungsbahn, so dass Bandführungsborde an dem Zahnrad oder ähnliche Bandführungselemente nicht mehr erforderlich sind.

Nach einem zusätzlichen Ausführungsbeispiel kann die gemeinsame Achse, um die sich die angeflanschten Führungsrollen drehen, als ein durch die Bohrung verlaufender Lagerstift ausgebildet sein.

Seitlich und parallel zu dem Band sind vorzugsweise zwei Rahmenplatten angeordnet, welche jeweils eine Führungsbahn für die angeflanschten Führungsrollen umfassen.

Gemäß einer weiteren Ausführungsform der vorliegenden Erfindung kann das Produkthandhabungselement als ein um eine durch die Öffnung in dem mindestens einen Zahn definierte Achse schwenkbar befestigter Greifer ausgebildet sein, welcher einen Greiferhebel und einen daran angeordneten Kurvenfolger umfasst. Ferner ist angrenzend an die Bahn des Bandes vorzugsweise eine Kurvenbahn vorgesehen. Durch die Bewegung des Kurvenfolgers auf dieser Kurvenbahn kann der Greifer wahlweise in eine geöffnete oder eine geschlossene Position bewegt werden.

Der Greifer ist vorzugsweise mit einer Federkraft beaufschlagt und in eine geschlossene Position vorgespannt. Alternativ kann die Kurvenbahn derart in zwei Abschnitte unterteilt sein, dass ein erster Kurvenabschnitt den Greifer in die geschlossene Position und ein zweiter Kurvenabschnitt den Greifer in die geöffnete Position bewegt.

Die Erfindung ermöglicht somit in vorteilhafter Weise bei geringem Wartungsaufwand ein zeitlich abstimmbares und steuerbares Ergreifen der Produkte und deren Transport durch verschiedene Abschnitte einer Druckmaschine (z. B. einen Falzapparat) entlang einer geradliniger oder gekrümmten Transportbahn oder einer Kombination aus geradlinigen und gekrümmten Transportbahnabschnitten. Dabei ist eine kompakte Anordnung der gesamten Vorrichtung möglich.

Die Merkmale der vorliegenden Erfindung werden in der folgenden Beschreibung bevorzugter Ausführungsbeispiele im Zusammenhang mit den beigefügten, nachstehend aufgeführten Zeichnungen näher erläutert.

Es zeigen:
- Fig. 1: eine perspektivische Darstellung eines um ein Zahnrad geführten Zahnriemens mit einem Greifermechanismus;
- Fig. 2: eine perspektivische Darstellung eines Riemenabschnitts mit einem schwenkbar an dem Riemen befestigten Greiferelement;
- Fig. 3A bis 3C: vergleichbare perspektivische Darstellungen verschiedener an dem Riemen befestigter Produkthandhabungselemente; und
- Fig. 4: eine schematische Seitenansicht eines mittels einer Kurve aktivierten, an einem erfindungsgemäßen Zahnriemen angeordneten Greifers.

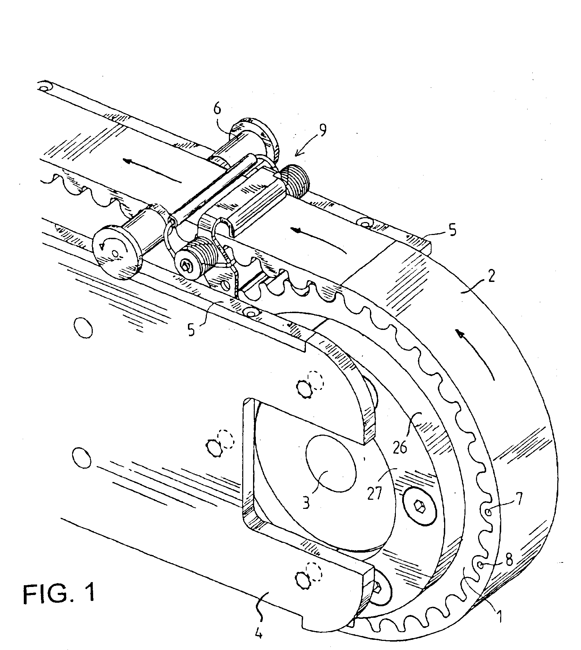

Fig. 1 zeigt einen erfindungsgemäßen Zahnriemen mit Greifermechanismus, wie er z. B. in einem Falzapparat einer Druckmaschine, einem Bogenanleger einer Bogendruckmaschine oder als Bahneinzugsvorrichtung in einer Rollenrotationsdruckmaschine eingesetzt werden kann. Ein Zahnriemen 2 wird in die durch die Pfeile angezeigte Richtung um ein Zahnrad 1 herumgeführt. Das Zahnrad 1 dreht sich um eine bezüglich der zwei Rahmenplatten 4 ortsfest angeordnete Achse 3. Die Rahmenplatten 4 weisen Führungsbahnen 5 auf, auf denen an dem Riemen angeordnete Führungsrollen 6 abrollen, welche den Riemen 2 in seiner Bahn halten. Bedingt durch diese Führungsrollen 6 sind an dem Zahnrad 1 keine Führungsränder oder ähnliche Führungselemente nötig. In dem Band 2 sind vorzugsweise Öffnungen 7 und 8 gebildet, an welchen, wie im Folgenden näher erläutert wird, verschiedene Produkthandhabungselemente befestigt werden können. In Fig. 1 sind als Beispiele für derartig befestigte Elemente die angeordneten Führungsrollen 6 und ein Greifer 9 gezeigt.

Die Öffnungen 7, 8 können z. B. in das Zahnprofil des Riemens 2 eingebohrt sein oder bereits beim Gießen oder allgemein bei der Herstellung des Riemens in diesen eingebracht sein. In die Öffnungen können Gleitlager eingefügt sein, so dass eine Schwenk- oder Befestigungsverbindung mit geringer Reibung gewährleistet ist. Die Öffnungen 7 und 8 und somit alle mittels der Öffnungen befestigten Vorrichtungen werden entlang der Riemenbahn synchron angetrieben.

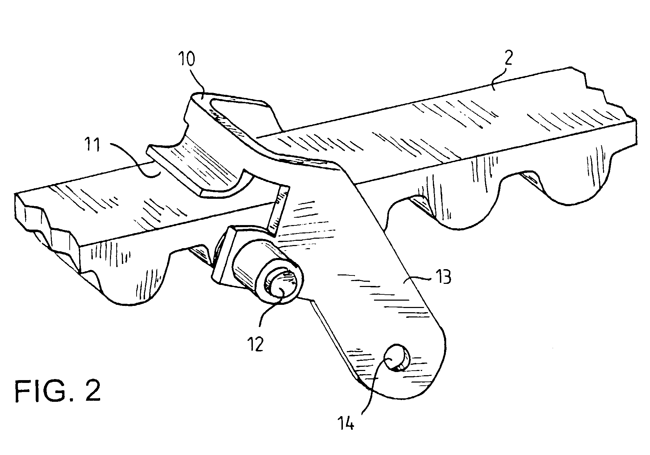

In Fig. 2 ist ein Greiferelement 10 an dem Riemen 2 befestigt, indem es an eine Stiftwelle 12 angelenkt ist. Das Greiferelement 10 ist Teil eines herkömmlichen, mit Federkraft beaufschlagten und kurvengesteuerten Greifers 9, wie er in Fig. 1 gezeigt ist. Das Greiferelement 10 umfasst einen Schwenkhebel 13, an dessen freiem Ende eine Hebelbohrung 14 vorgesehen ist Durch eine Schwenkbewegung des Schwenkhebels 13 im Uhrzeigersinn, verursacht durch eine von der Kurve hervorgerufene Abwärtsbewegung der Hebelbohrung 14, wird der Greifer geöffnet und durch eine Schwenkbewegung gegen den Uhrzeigersinn geschlossen, wobei eine Greiferfläche 11 nach unten auf die Oberfläche des Riemens 2 gedrückt wird.

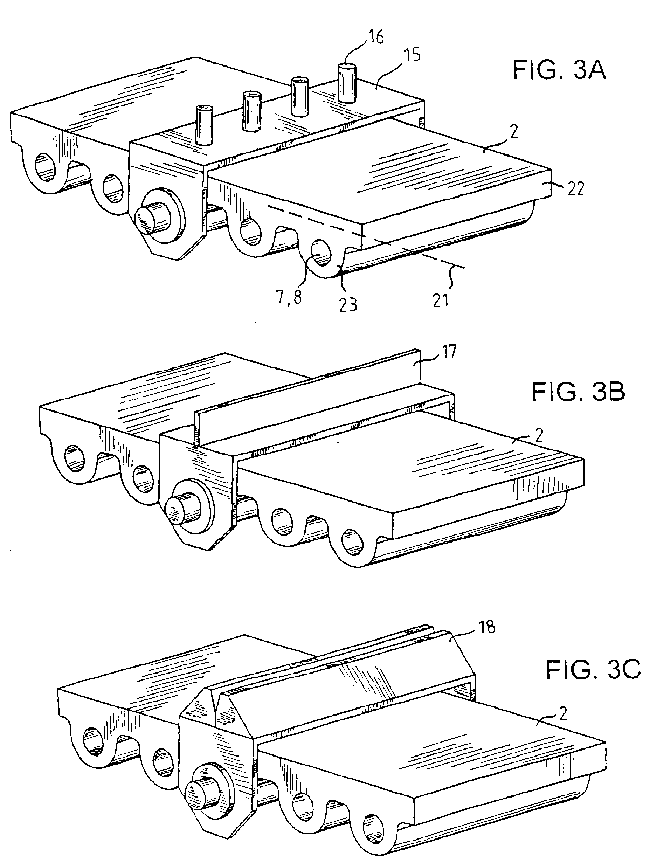

In Fig. 3A bis 3C sind verschiedene Produkthandhabungselemente gezeigt, die an dem Zahnriemen 2 befestigt werden können. In Fig. 3A ist z. B. eine an dem Zahnriemen 2 befestigte Nadelanordnung 15 mit einer Vielzahl von in einer Reihe angeordneten Nadeln 16 gezeigt, die z. B. die Funktion von die Druckprodukte durchstoßenden Punkturnadeln besitzen können. In Fig. 3B ist an dem Riemen 2 ein Falzmesser 17 und in Fig. 3C ein Falzklappenpaar 18 befestigt. Durch diese Darstellungen wird deutlich, dass die erfindungsgemäße Vorrichtung nicht nur für Greifermechanismen verwendet werden kann, sondern für jede Art von Vorrichtung in einem Produkthandhabungssystem, in dem bei hoher Geschwindigkeit eine zeitlich abgestimmte Bearbeitung erforderlich ist.

Zahnriemen und geeignete Zahnräder sind z. B. bei The Gates Rubber Company, Denver, Colorado erhältlich. Die von diesem Unternehmen angebotenen Zahnriemen werden als HTD®-Riemen bezeichnet und sind in verschiedenen Größen und Ausmessungen erhältlich. Derartige Riemen unterscheiden sich durch den Zahnabstand (den entlang des Riemens gemessenen Abstand zwischen den Mittelpunkten aneinandergrenzender Zähne), der Gesamtlänge des Riemens und der Riemenbreite. Wie Fig. 3A zu entnehmen ist, liegt die gedachte Linie 21, welche die Richtung des Riemens 2 anzeigt, vorzugsweise in einer von dehnfesten, den Riemen in Längsrichtung verstärkenden Elementen 22, z. B. Fasern, gebildeten Ebene. Befindet sich der Riemen 2 auf dem Zahnrad 1, so liegt die Linie 21 außerhalb des Außendurchmessers des Zahnrads 1. Die Öffnungen 7, 8 sind mittig in den Zähnen 23 des Riemens 2 angeordnet. Die Zähne 23 sind vorzugsweise halbkreisförmig ausgebildet, wobei ihr flacher Abschnitt von den verstärkenden Elementen 22 gebildet ist oder diese enthält. Die Dehnfestigkeit des Riemens 2 wird durch die Öffnungen 7, 8 nicht reduziert. Der Schwenkpunkt, an welchen das Greiferelement 10 angelenkt ist, liegt mittig in dem jeweiligen Zahn 23 und ist damit im Wesentlichen (ungefähr einen Zahnradius) unterhalb der Linie 21 angeordnet. Mit anderen Worten liegt die Bewegungsbahn des Schwenkpunktes innerhalb des Radius oder Durchmessers des Zahnradradkreises, welcher im Wesentlichen der Linie 21 entspricht. Dadurch ist eine kompakte Anordnung möglich, ohne dass die Dehnfestigkeit des Riemens 2 beeinträchtigt wird.

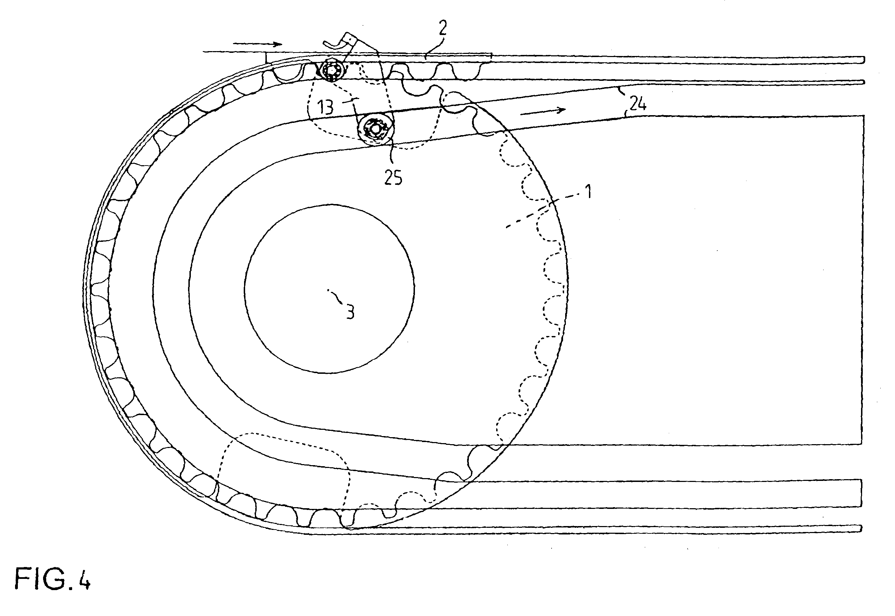

Fig. 4 zeigt eine Seitenansicht eines Zahnriemens 2 mit einem Greifermechanismus. Angrenzend an das Zahnrad 1, knapp außerhalb der Riemenbahn, ist eine Kurvenbahn 24 angeordnet. Ein auf den Greiferhebel 13 montierter Kurvenfolger 25 bewegt sich entlang der Kurvenbahn 24. Aufgrund der Tatsache, dass die Kurvenbahn 24 die Position des Hebels 13 exakt definiert, ist es nicht nötig, das in Fig. 4 gezeigte Greiferelement mit Federkraft zu beaufschlagen (der in Fig. 1 gezeigte Greifer 9 ist dagegen in seiner geschlossenen Position mit Federkraft beaufschlagt). Daher genügt es, nur eine Kurvenfläche 26 vorzusehen, welche den Greifer 9 in seine geöffnete Position bewegt, während er sich um das Zahnrad 1 bewegt (in dem in Fig. 1 gezeigten Beispiel ist die Fläche 26 ferner auf einem starr an dem Zahnrad 1 befestigten Ringelement 27 gebildet). Es ist ebenfalls denkbar, die Fläche 26 an den Seitenrahmen 4 zu montieren oder unabhängig anzutreiben.

Wie bereits zuvor angedeutet, ist das erfindungsgemäße System für die verschiedensten Vorrichtungen zur Handhabung von Produkten geeignet, die nach genauen Zeitvorgaben und mit hohen Geschwindigkeiten arbeiten. Vorteilhafte Ausführungsformen umfassen Zahnriemen mit Greifermechanismen zum sicheren Ergreifen und Führen von einzelnen Bogen in einer Bogendruckmaschine sowie Greifermechanismen, die als Bahneinzugsvorrichtung in einer Rollendruckmaschine zum Einziehen der Bahn während des Einrichtens der Maschine eingesetzt werden. Aufgrund der Biegsamkeit des Zahnriemens kann das System auch spiralförmige oder kurvige Abschnitte umfassen. Dadurch kann ein Produkt durch die verschiedensten denkbaren, bisher unüblichen Transportbahnen geführt werden. Allen Anwendungsbeispielen ist gemeinsam, dass der Zahnriemen bei kompakter Bauweise, geringem Wartungsaufwand und auch bei hohen Geschwindigkeiten einen laufruhigen, zeitlich abgestimmten und sicheren Transport der Produkte über beträchtliche Entfernungen ermöglicht.

### Liste der Bezugszeichen

- 1: Zahnrad
- 2: Zahnriemen
- 3: Achse
- 4: Rahmenplatten
- 5: Führungsbahnen
- 6: Führungsrollen
- 7, 8: Öffnungen
- 9: Greifer
- 10: Greiferelement
- 11: Greiferfläche
- 12: Stiftwelle
- 13: Schwenkhebel
- 14: Hebelöffnung
- 15: Nadelanordnung
- 16: Nadeln
- 17: Falzmesser
- 21: Umfangslinie
- 22: dehnfestes Element
- 23: Zähne
- 24: Kurvenbahn
- 25: Kurvenfolger
- 26: Kurvenbahn
- 27: Ringelement

## Patentansprüche

1. Vorrichtung zur Handhabung von Produkten, insbesondere von Druckprodukten oder Signaturen im Falzapparat einer Rollenrotationsdruckmaschine, die einen Zahnriemen (2) mit einer Vielzahl von Zähnen (23) und mindestens ein Produkthandhabungselement (9, 15, 17, 18) umfasst,
**dadurch gekennzeichnet,**
dass das Produkthandhabungselement (9, 15, 17, 18) an dem Zahnriemen (2) befestigt ist.

2. Vorrichtung nach Anspruch 1,
**dadurch gekennzeichnet,**
dass der Zahnriemen (2) in Längsrichtung dehnfest ist.

3. Vorrichtung nach Anspruch 1 oder 2,
**dadurch gekennzeichnet,**
dass das Produkthandhabungselement (9, 15, 17, 18) an einem der Zähne (23) befestigt ist.

4. Vorrichtung nach Anspruch 3,
**dadurch gekennzeichnet,**
dass mindestens einer der Zähne (23) eine Öffnung (7, 8) aufweist, mittels welcher das Produkthandhabungselement (9, 15, 17, 18) an dem Zahnriemen (2) befestigt ist.

5. Vorrichtung nach Anspruch 4,
**dadurch gekennzeichnet,**
dass die Öffnung (7, 8) als eine sich durch den mindestens einen Zahn (23) erstreckende Bohrung ausgebildet ist und dass sich durch die Bohrung ein Lagerstift (12) erstreckt.

6. Vorrichtung nach einem der Ansprüche 1 bis 5,
**dadurch gekennzeichnet,**
dass der Zahnriemen (2) als ein endloser Riemen ausgebildet ist, dessen Zähne (23) eine Innenfläche bilden, und dass weiterhin ein Zahnrad (1) vorgesehen ist, um welches der endlose Riemen (2) herumgeführt wird, wobei die Zähne des Zahnrades (1) in die Zähne (23) des endlosen Riemens (2) eingreifen.

7. Vorrichtung nach einem der Ansprüche 1 bis 6,
**dadurch gekennzeichnet,**
dass das Produkthandhabungselement (9, 15, 17, 18) als ein Greiferelement (10) ausgebildet ist.

8. Vorrichtung nach Anspruch 7,
**dadurch gekennzeichnet,**
dass das Greiferelement (10) um eine durch eine Öffnung (7, 8) verlaufende Achse (12) schwenkbar ist und einen Greiferhebel (13) und einen an diesem befestigten Kurvenfolger (25) umfasst, und dass ferner eine an die Bewegungsbahn des Riemens (2) angrenzende Kurvenbahn (24) vorgesehen ist, in der Weise, dass durch die Bewegung des Kurvenfolgers (25) auf der Kurvenbahn (24) der Greifer (9) wahlweise in eine geöffnete und eine geschlossene Position bewegbar ist.

9. Vorrichtung nach Anspruch 8,
**dadurch gekennzeichnet,**
dass der Greifer (9) als ein mit einer Federkraft beaufschlagter Greifer ausgebildet ist, welcher in der geschlossenen Position vorgespannt ist.

10. Vorrichtung nach Anspruch 8 oder 9,
**dadurch gekennzeichnet,**
dass die Kurvenbahn (24) in zwei Kurvenabschnitte unterteilt ist, wobei ein erster Kurvenabschnitt den Greifer in die geschlossene Position bewegt und ein zweiter Kurvenabschnitt den Greifer in die geöffnete Position bewegt.

11. Vorrichtung nach einem der Ansprüche 1 bis 6,
**dadurch gekennzeichnet,**
dass das Produkthandhabungselement (9, 15, 17, 18) eine Nadelanordnung (15) zum Durchstechen der Produkte aufweist.

12. Vorrichtung nach einem der Ansprüche 1 bis 6,
**dadurch gekennzeichnet,**
dass das Produkthandhabungselement (9, 15, 17, 18) ein Falzmesser (17) zum Falzen der Produkte aufweist.

13. Vorrichtung nach einem der Ansprüche 1 bis 6,
**dadurch gekennzeichnet,**
dass das Produkthandhabungselement (9, 15, 17, 18) ein Falzklappenpaar (18) zum Falzen der Produkte aufweist.

14. Vorrichtung nach einem der vorhergehenden Ansprüche,
**dadurch gekennzeichnet,**
dass die Vorrichtung weiterhin mindestens ein an dem Riemen befestigtes Führungsrollenpaar (6) umfasst, welches um eine durch die Öffnung (7, 8) verlaufende gemeinsame Achse drehbar ist, und dass seitlich des Riemens (2) und parallel zu dem Riemen (2) zwei Rahmenplatten (4) angeordnet sind, die jeweils eine Führungsbahn (5) umfassen, welche jeweils eine der Führungsrollen des Führungsrollenpaars (6) stützt.

15. Druckmaschine,
**gekennzeichnet durch**
eine Produkthandhabungsvorrichtung nach einem der vorhergehenden Ansprüche.

16. Falzmaschine,
**gekennzeichnet durch**
eine Produkthandhabungsvorrichtung nach einem der vorhergehenden Ansprüche.
